# FASCICULE DE BREVET EUROPEEN

(11) **EP 0 914 298 B1**
(45) Date de publication et mention de la délivrance du brevet: **06.08.2008**
(21) Numéro de dépôt: 98920599.2
(22) Date de dépôt: 09.04.1998
(51) Int. Cl.: C03C 3/085, C03C 3/091, C03C 21/00

(54) **COMPOSITION DE VERRE ET SUBSTRAT EN VERRE TREMPE CHIMIQUEMENT**
GLASZUSAMMENSETZUNG UND SUBSTRAT AUS CHEMISCH GEHÄRTETEM GLAS
GLASS COMPOSITION AND CHEMICALLY TEMPERED GLASS SUBSTRATE

(30) Priorité: 11.04.1997 FR 9704508
(43) Date de publication de la demande: 12.05.1999
(73) Titulaire: SAINT-GOBAIN GLASS FRANCE, 92400 Courbevoie (FR)
(72) Inventeur: CHOPINET, Marie-Hélène, F-75018 Paris (FR); ROUYER, Elisabeth, F-92600 Asnières (FR); GAUME, Olivier, F-92300 Levallois-Perret (FR)
(74) Mandataire: Muller, René
(86) Numéro de dépôt international: PCT/FR1998/000721
(87) Numéro de publication internationale: WO 1998/046537

(56) Documents cités:
- WO-A-94/08910
- FR-A- 2 051 664
- FR-A- 2 128 031
- PATENT ABSTRACTS OF JAPAN vol. 010, no. 280 (C-374), 24 septembre 1986 & JP 61 101433 A (NIPPON SHEET GLASS CO LTD), 20 mai 1986,

## Description

L'invention concerne des compositions aptes à être transformées en ruban de verre. Les compositions de verre selon l'invention sont plus particulièrement destinées à des applications du type vitrage aéronautique sans pour autant se limiter à des telles applications.

Concernant les applications de type aéronautique, l'invention vise plus particulièrement des vitrages pouvant présenter après trempe chimique des contraintes de compression élevées sur une grande profondeur.

Pour ces applications, notamment les vitrages avions ou hélicoptères, les exigences en matière de résistance mécanique sont telles qu'il est généralement procédé à une opération de renforcement par voie chimique et non simplement par voie thermique comme il est usuel, par exemple, pour les vitrages automobiles. La trempe chimique peut aussi être utilisée pour d'autres applications très exigeantes, telles que par exemple les vitrages pour véhicules blindés, ferroviaires, maritimes ou bien encore automobiles.

Comme dans le cas d'une trempe thermique, une trempe chimique consiste à mettre la surface du verre en compression, la résistance à la rupture du verre étant accrue d'une valeur sensiblement identique à l'intensité de la contrainte de compression superficielle générée par le traitement, en l'occurence générée par la substitution d'une partie des ions alcalins des couches superficielles du verre par d'autres ions plus encombrants qui viennent s'insérer dans le réseau vitreux.

Pour des sollicitations exercées sur la totalité du vitrage, à l'exemple de la pression exercée par l'air d'une cabine de pilotage pressurisée, et pour des sollicitations plus dynamiques, par exemple le choc avec un oiseau pour lequel l'impact engendre une sollicitation très élevée qui peut provoquer la casse du verre à partir d'une face en extension présentant des défauts de surface, la qualité du renforcement mécanique est dictée d'une part, par la valeur de la contrainte de compression superficielle et d'autre part, par la profondeur traitée. Idéalement, l'opération de trempe chimique a ainsi pour objet de placer sous une contrainte de compression très élevée les couches superficielles de l'objet en verre traité, sur une profondeur très grande et au moins égale à celle du plus grand défaut possible.

Pour une composition verrière donnée, la profondeur échangée dépend de la durée du traitement d'échanges d'ions et de la température à laquelle celui-ci est réalisé. Toutefois, une élévation de la température entraîne une élévation de la vitesse de relaxation des contraintes et par conséquent des niveaux de contraintes de rupture bas. Trop prolonger le traitement aboutit de même à un degré de trempe non satisfaisant, les contraintes ayant alors le temps nécessaire pour se relaxer.

Ces considérations ont conduit à développer de nouvelles compositions verrières plus favorables aux échanges ioniques que les compositions de verre à vitre traditionnelle, et permettant notamment l'obtention de profondeurs d'échange plus grandes pour des durées de traitement n'excédant pas quelques heures. C'est ainsi que la demande de brevet FR-A-2 128 031 propose des verres silico-sodiques, faisant appel à des oxydes couramment rencontrés dans des verres industriels classiques, répondant à la composition suivante, définie par ses pourcentages pondéraux :

| | |
|---|---|
| SiO₂ | 65,0 - 76,0 % |
| Al₂O₃ | 1,5 - 5,0 % |
| MgO | 4,0 - 8,0 % |
| CaO | 0,0 - 4,5 % |
| Na₂O | 10,0 - 12,0 % |
| K₂O | 1,0 - 4,0 % |
| B₂O₃ | 0,0 - 4,0 % |

ces éléments représentant au moins 96% du poids du verre et respectant en outre les pourcentages pondéraux CaO/[CaO + MgO] compris entre 0 et 0,45 et K₂O /[Na₂O+K₂O] entre 0,05 et 0,35, ces limites étant incluses.

Les compositions ci-dessus définies permettent d'obtenir après 24 heures une profondeur de renfort de 1,8 à 3,3 fois supérieure à la profondeur obtenue avec du verre à vitre ordinaire.

Toutefois dans la demande de brevet FR-A-2 128 031, les échanges ioniques sont relativement brefs, systématiquement limités à des durées d'au plus 24 heures, ce qui permet d'atteindre au plus une épaisseur de la couche renforcée d'environ 100 microns (pour une température de traitement de 450°C). Or, pour les applications aéronautiques notamment, il est nécessaire que cette épaisseur soit bien supérieure et par exemple d'environ 300 microns, ce qui ramène au problème évoqué plus haut sur les compositions verrières traditionnelles.

Il a également déjà été mis en évidence dans le brevet EP-0 665 822 que de telles compositions verrières sont également adaptées à des traitements longs, typiquement d'au moins 72 heures et notamment de plus de 10 jours ou encore plus de 15 jours, les traitements pouvant dépasser éventuellement la vingtaine de jours, et peuvent de ce fait être utilisées pour l'obtention d'objets en verre renforcés par échanges ioniques sur une profondeur grande, par exemple de 200 microns ou plus, tout en préservant des niveaux de renforcement très satisfaisants, par exemple avec des contraintes de compression superficielles d'au moins 400 MPa. Il est ainsi décrit des produits en verre dont la composition répond à la formulation connue du brevet FR-A-2 128 031 et qui ont subi un traitement de renforcement par échange ionique à une température telle que la contrainte de compression superficielle soit d'au moins 400 MPa et de préférence d'au moins 500 MPa, pour une profondeur traitée d'au moins 200 microns ou encore des objets dont la contrainte de compression superficielle est d'au moins 650 MPa pour une profondeur traitée d'au moins 75 microns.

A titre indicatif, le traitement effectué peut être par exemple de 18 jours à une température de 415°C, ce qui conduit à des contraintes de compression superficielles d'environ 500 MPa, et une profondeur échangée d'environ 265 microns. Si l'application envisagée peut admettre des profondeurs de traitement moindres, il est aussi possible d'obtenir des niveaux de renforcement sensiblement supérieurs, avec des contraintes de compression superficielles par exemple d'environ 700 MPa ou plus, avec des traitements à basse température (par exemple 350°C), pendant des durées sensiblement identiques au cas précédent, avec alors une profondeur de traitement d'environ 80 microns.

Si les propriétés mécaniques obtenues sont satisfaisantes, il apparaît tout de même, qu'elles nécessitent des temps de traitement de trempe relativement importants.

Par ailleurs, outre les exigences concernant les propriétés mécaniques, il est nécessaire, plus particulièrement dans le cas de vitrage d'avion d'obtenir une bonne résistance chimique et notamment une bonne résistance hydrolytique. En effet, la consommation de verre pour ce type de produit est relativement peu importante comparée aux capacités de production des fours dans l'industrie verrière ; il est donc souhaitable de pouvoir conserver du verre pendant un temps, pouvant correspondre à plusieurs années, tout en conservant les propriétés du verre.

L'invention a ainsi pour but des compositions de verre présentant une bonne résistance hydrolytique combinée à des aptitudes pour subir une trempe chimique conduisant à des contraintes telles que celles requises pour des applications du type vitrage aéronautique, l'obtention de ces contraintes nécessitant des temps de traitement inférieurs à ceux des compositions connues.

Ce but est atteint selon l'invention par une composition de verre destinée à être transformée en ruban de verre, comprenant les constituants ci-après dans les proportions pondérales suivantes :

| | |
|---|---|
| SiO₂ | 55 - 71 % |
| Al₂O₃ | > 2 % |
| MgO | 4-11 % et > 8 % si Al₂O₃ < 5 % |
| Na₂O | 9 - 16,5 % |
| K₂O | 4 - 10 % |

La composition selon l'invention respecte de préférence les pourcentages pondéraux suivant Na₂O/K₂O < 1,8 et de préférence < 1,4. Ces compositions préférées autorisent des temps de traitement encore plus courts conduisant à des contraintes satisfaisantes et équivalentes à celles des techniques antérieures. Il apparaît en effet que ces compositions permettent une meilleure diffusion lors de la trempe sans relâchement des contraintes plus important.

Les compositions précédemment définies présentent effectivement l'avantage de combiner une bonne résistance hydrolytique et des aptitudes au renforcement chimique, notamment en vue d'applications aéronautiques.

Selon une variante préférée de l'invention, la somme des pourcentages pondéraux des oxydes alcalins est inférieure à 23% et de préférence inférieure à 21%. Une teneur trop élevée en oxydes alcalins diminue la résistance hydrolytique.

La teneur en Na₂O est avantageusement inférieure à 14% et la teneur en K₂O est quant à elle de préférence supérieure à 7%. Les oxydes Na₂O et K₂O permettent de maintenir la température de fusion des verres selon l'invention et leurs viscosités aux températures élevées dans des limites acceptables. La présence simultanée de ces deux oxydes dans des proportions telles que définies permet d'augmenter considérablement la résistance chimique du verre, plus particulièrement la résistance hydrolytique, ainsi que la résistivité.

Les inventeurs définissent encore la composition comme possédant avantageusement une alcalinité inférieure à 15 et de préférence inférieure à 10.

Dans le contexte de l'invention, la teneur en SiO₂ ne doit pas excéder environ 71 % ; au-delà, la fusion du mélange vitrifiable et l'affinage du verre nécessitent des températures élevées qui provoquent une usure accélérée des réfractaires des fours. Au-dessous de 55%, la stabilité des verres selon l'invention est insuffisante. Les verres selon l'invention qui fondent le plus facilement, dont les viscosités se prêtent le mieux au flottage du verre sur un bain de métal fondu, et qui présentent une bonne résistance hydrolytique et de meilleures aptitudes au renforcement chimique, comprennent entre 60 et 65% de SiO₂.

La teneur en MgO est de préférence supérieure à 7%. Cet élément favorise la fusion de ces compositions de verre, améliore la viscosité aux hautes températures et contribue également à l'augmentation de la résistance hydrolytique des verres. Si d'autres éléments alcalino-terreux peuvent être présents dans la composition, CaO, qui est un élément nuisible pour la trempe chimique, n'est de préférence présent que sous forme d'impureté avec une teneur pondérale inférieure à 0,5%.

L'alumine joue un rôle de stabilisant. Cet oxyde augmente dans une certaine mesure la résistance chimique du verre. La teneur en Al₂O₃ ne doit pas excéder 18% sous peine de rendre trop difficile la fusion et d'augmenter dans des proportions inacceptables la viscosité du verre aux températures élevées. Elle est avantageusement inférieure à 14%.

Les compositions de verre selon l'invention peuvent encore comporter l'oxyde B₂O₃. La teneur en B₂O₃ n'excède alors pas 4% car, au-delà de cette valeur, la volatilisation du bore en présence d'oxydes alcalins lors de l'élaboration du verre peut devenir non négligeable et peut conduire à une corrosion des réfractaires. En outre, des teneurs plus élevées en B₂O₃ nuisent à la qualité du verre. Lorsque B₂O₃ est présent dans la composition de verre avec une teneur supérieure à 2%, la teneur en Al₂O₃ est avantageusement supérieure à 10%.

Selon une réalisation préférée de l'invention, la teneur en B₂O₃ est inférieure à 2% et la teneur en Al₂O₃ est alors inférieure à 10%.

Les compositions de verre peuvent en outre contenir des agents colorants, notamment pour des applications de type vitrages automobiles ; il peut s'agir notamment des oxydes de fer, de chrome, de cobalt, de nickel, de sélénium, .... L'invention prévoit encore des compositions de verre possédant une transmission lumineuse et une transmission énergétique qui peuvent être adaptées, selon les principes connus de l'homme du métier, en fonction des applications visées. La transmission lumineuse est avantageusement supérieure à 71 %.

Parmi les compositions selon l'invention, on retiendra de préférence, celles qui présentent un domaine de formage autour de 1050-1150°C, rappelons que pour le procédé float, le domaine de formage correspond au domaine des températures pour lesquelles la viscosité du verre exprimée en poises est comprise entre 1585 (log η = 3,2) et 5000 (log η = 3,7).

De préférence encore, les compositions retenues présentent une température, correspondant à la viscosité log η = 3,5, supérieure à la température de liquidus (T_{liq}) et de préférence dont la différence entre ces deux températures est supérieure à 10°C et de préférence supérieure à 20°C. De cette façon, le verre peut être obtenu selon le procédé float sans risque de dévitrification.

Une autre propriété mise en évidence pour les compositions selon l'invention concerne leur coefficient de dilatation supérieur à 90.10⁻⁷°C⁻¹. Cette caractéristique montre une aptitude de ces compositions à une trempe thermique.

Plus particulièrement pour les applications du type aéronautiques, les vitrages sont revêtus de couches par exemple déposées par pyrolyse. L'invention prévoit avantageusement des compositions autorisant de tels dépôts sans relâchement rédhibitoire des contraintes. Avantageusement les compositions selon l'invention présentent une température supérieure de recuisson T_{S} (point de la courbe dilatométrique tel que défini dans l'ouvrage « Le Verre » de Horst SCHOLZE) supérieure à 500°C et de préférence supérieure à 540°C.

L'invention a également pour but des substrats en verre dont la matrice répond à une des compositions précédentes ayant subi un renforcement par échange ionique en vue d'application du type aéronautique. Les compositions selon l'invention présentent de façon surprenante pour l'homme de l'art, des niveaux de contrainte de compression superficielle suffisants pour des traitements de trempe d'une durée inférieure à celle des dernières techniques antérieures mentionnées ; la relaxation desdites contraintes de compression n'est pas aussi importante qu'aurait pu le penser l'homme du métier pour de telles durées de traitement. Il est en effet possible d'obtenir des substrats en verre présentant après trempe chimique des niveaux de contraintes de compression au moins égaux à 400 MPa, ce qui convient pour les applications visées.

Selon une première variante de l'invention, le substrat en verre est renforcé par échange d'ions superficiels sur une profondeur d'échange superficiel supérieure à 200 microns et il présente des contraintes de compression superficielles supérieures à 400 MPa.

Selon une autre variante de l'invention, le substrat en verre est renforcé par échange d'ions superficiel sur une profondeur d'échange superficiel supérieure à 50 microns et il présente des contraintes de compression superficielles supérieures à 700 MPa.

L'invention propose encore un procédé d'obtention d'un substrat en verre consistant à former le verre dans une installation du type float puis à traiter le substrat par échange d'ions potassium pendant une durée d'au moins 24 heures à une température comprise entre 350°C et 500°C.

D'autres détails et caractéristiques avantageuses de l'invention ressortiront ci-après des exemples présentés conformément à l'invention.

Des essais ont été réalisés sur différentes matrices verrières répondant aux formulations suivantes (exprimées en pourcentages pondéraux).

L'exemple 1 illustre une composition selon l'art antérieur et satisfait aux critères requis pour des applications aéronautiques. La composition selon l'exemple 1 est un exemple illustrant le brevet EP-0 665 822.

L'exemple 4 ne correspond pas à l'enseignement de la présente invention.

| | **EX. 1** | **EX. 2** | **EX. 3** | **EX. 4** | **EX. 5** | **EX. 6** |
|---|---|---|---|---|---|---|
| SiO₂ | 66,66 | 62,00 | 61,05 | 66,1 | 67 | 63,5 |
| Al₂O₃ | 4,59 | 8,65 | 8,05 | 7,5 | 2,8 | 6 |
| MgO | 6,89 | 7,74 | 7,90 | 4,35 | 10,05 | 9 |
| CaO | - | 0,39 | 0,36 | - | - | - |
| Na₂O | 12,2 | 10,90 | 12,55 | 15,85 | 10,15 | 12 |
| K2O | 6,16 | 9,48 | 9,50 | 5,2 | 9,4 | 9,5 |
| B₂O₃ | 3,44 | 0 | 0 | 0,15 | 0,1 | - |
| Divers | 0,06 | 0,84 | 0,59 | 0,85 | 0,5 | - |
| Tₛ | 550 | 544 | 549 | 518 | 549 | 551 |
| α(20-300°C) 10⁻⁷°C⁻¹ | 93,4 | 101,7 | 108,4 | 111,8 | 101,7 | 107,8 |
| Tlogη = 2 (°C) | 1483 | 1551 | 1504 | 1500 | 1507 | 1500 |
| Tlogη=3,5(°C) | 1126 | 1214 | 1164 | 1135 | 1167 | 1165 |
| T_{lig} (°C) | 880 | > 1100 | >1100 | 980 | 1020 | > 1100 |

Les trois dernières lignes du tableau indiquent les températures correspondant pour la première, à la viscosité log η = 2, qui est la température dans le bain de fusion, pour la seconde à la viscosité log η = 3,5 qui est la température choisie d'entrée du verre sur le bain de métal en fusion et enfin pour la troisième au liquidus (T_{liq}).

Ces premières indications montrent déjà que ces compositions de verre selon l'invention peuvent constituer des substrats en verre obtenus selon la technique float

Dans le tableau suivant, apparaissent différents types de traitement de trempe dans un bain de nitrate de potassium dans lesquels la température et la durée des traitements varient. Ces différents traitements ont été effectués sur une composition selon l'invention définie par l'exemple 2 :

| | **Température de traitement** | **Durée (jour)** | **Contrainte de surface (MPa)** | **Profondeur (microns)** |
|---|---|---|---|---|
| 1 | 380°C | 2 | 600 | 90 |
| 2 | 406°C | 2 | 560 | 125 |
| 3 | 406°C | 9 | 500 | 255 |
| 4 | 406°C | 15 | 460 | 320 |
| 5 | 425°C | 2 | 490 | 160 |
| 6 | 425°C | 8 | 430 | 315 |
| 7 | 425°C | 12 | 410 | 375 |
| 8 | 460°C | 2 | 400 | 265 |
| 9 | 460°C | 8 | 300 | 510 |
| 10 | 460°C | 12 | 270 | 630 |

le second tableau illustre des traitements pour les exemples de compositions 3, 4, 5 et 6 :

| | **Température de traitement** | **Durée (jours)** | **Contraintes de surface (MPa)** | **Profondeur (microns)** |
|---|---|---|---|---|
| 3 406°C | | 15 | 475 | 365 |
| 4 | 406°C | 10 | 260 | 330 |
| 5 | 406°C | 15 | 455 | 320 |
| 6 | 406°C | 15 | 430 | 345 |

Les tableaux ci-dessus montrent que les compositions selon l'invention sont particulièrement favorables aux échanges ioniques, dans un bain de nitrate de potassium. Il ressort clairement que les verres de l'invention permettent d'obtenir des niveaux de contraintes de compression très élevés pour des profondeurs échangées satisfaisantes pour des applications aéronautiques. La diminution prévisible des valeurs de résistance à la rupture est bien vérifiée au fur et à mesure qu'est accrue la durée du traitement mais cette diminution, due à un début de relaxation des contraintes n'est pas telle qu'elle conduise à des faibles niveaux.

Dans le tableau qui suit, on compare un traitement de trempe chimique effectué sur la composition selon l'exemple 1 avec différents traitements effectués sur une composition selon l'exemple 2.

| **Composition** | | **EX. 1** | **EX. 2** | **EX. 2** | **EX. 2** | **EX. 2** |
|---|---|---|---|---|---|---|
| Traitement de trempe chimique | Durée (jours) | 12 | 12 | 15 | 8 | 6 |
| | Température (°C) | 425 | 425 | 406 | 425 | 425 |
| Contrainte de surface (MPa) | | 450 | 410 | 460 | 430 | 470 |
| Profondeur (microns) | | 260 | 375 | 320 | 315 | 290 |

Il apparaît au vu de ce tableau que des compositions selon l'invention conduisent à des résultats au moins aussi satisfaisants voire meilleurs que ceux obtenus avec la composition selon l'exemple 1.

De plus, il apparaît qu'un traitement d'une durée de 6 jours à une température de 425°C conduit à un meilleur résultat que celui obtenu par un traitement d'une durée de 12 jours à 425°C avec une composition telle que celle de l'exemple 1. Ces derniers résultats sont jugés satisfaisants pour des applications du type aéronautique. Il apparaît donc clairement que des compositions selon l'invention vont permettre d'obtenir des résultats équivalents à ceux de l'exemple 1 avec des temps de traitement et donc des coûts réduits.

Le tableau qui suit présente les propriétés de résistance hydrolytique des verres selon l'invention. Ce tableau indique le résidu et l'alcalinité des compositions selon l'invention obtenues par une attaque à l'eau du verre en grains.

L'attaque à l'eau du verre en grains ou « DGG » est une méthode qui consiste à plonger 10 grammes de verre broyé, dont la taille des grains est comprise entre 360 et 400 micromètres, dans 100 millilitres d'eau portés à ébullition pendant 5 heures. Après refroidissement rapide, on filtre la solution et on évapore à sec un volume déterminé de filtrant. Le poids de la matière sèche obtenu permet de calculer la quantité de verre dissoute dans l'eau ou résidu ; cette quantité est exprimée en milligrammes pour une masse initiale de verre équivalente à 4 fois la masse volumique (soit 10 g pour une masse volumique de 2,5).

L'alcalinité quant à elle, est la masse moyenne d'alcalins en mg, solubilisés par une masse initiale de verre équivalente à 4 fois la masse volumique.

| | **1** | **2** | **3** | **4** | **5** | **6** |
|---|---|---|---|---|---|---|
| Résidus | 15,3 | 15,4 | 20,2 | 30,7 | 26,7 | 23,5 |
| Alcalinité | 4,2 | 5 | 8,9 | 15 | 8,5 | 9 |

Par ailleurs, il est apparu que les vitrages selon l'invention présentent une résistance très importante aux endommagements ponctuels, par exemple aux chocs avec des particules dures de petites tailles.

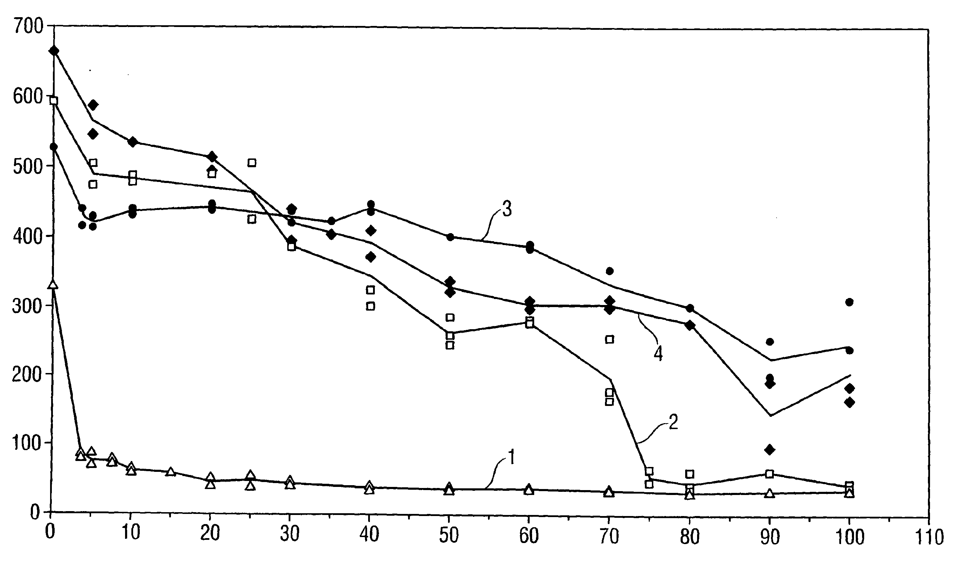

Les courbes sur la figure jointe en annexe illustrent cette propriété. Ces courbes ont été obtenues à partir d'essais réalisés sur des éprouvettes de 70x70 mm. Les essais consistent à mesurer le module de rupture à partir d'un essai tripode : chargement d'un anneau de diamètre 10 mm, tore 1 mm, sur un support de 3 billes équidistantes placées sur un cercle de rayon 20 mm. Pour chaque type d'éprouvettes, on effectue également les mesures de ces modules de rupture après formation d'un défaut. Pour cela, on effectue une indentation Vickers de charge donnée (de 3 à 100 N) au centre des éprouvettes sur la face en extension lors de l'essai. Les résultats sont présentés sur la figure qui comporte quatre courbes exprimant en ordonnée le module de rupture (MPa) et en abscisse la charge d'indentation (N).

La courbe 1 représente les essais sur des éprouvettes réalisées à partir d'un verre sodo-calcique non renforcé.

La courbe 2 représente les essais sur des éprouvettes réalisées à partir d'un verre selon l'exemple 1 renforcé à 425°C pendant 12 jours.

La courbe 3 représente les essais sur des éprouvettes réalisées à partir d'un verre selon l'exemple 4 renforcé à 406°C pendant 10 jours.

La courbe 4 représente les essais sur des éprouvettes réalisées à partir d'un verre selon l'exemple 5 renforcé à 406°C pendant 15 jours.

Ces courbes mettent en évidence la meilleure performance des verres renforcés chimiquement par rapport au verre sodo-calcique ordinaire. Elles montrent également une performance comparable voire meilleure, notamment pour de fortes charges d'indentation, des exemples 4 et 5 par rapport à l'exemple 1.

Les vitrages selon l'invention trouvent plus spécialement une application dans les vitrages composites tels que des pare-brise avions et plus généralement dans toutes les applications aéronautiques ou plus encore, dans toutes les applications usuelles des verres trempés et notamment pour des vitrages automobiles, vitrages blindés ou des vitrages de chemin de fer.

## Revendications

1. Composition de verre destinée à être transformée en ruban de verre, **caractérisée en ce qu'**elle comprend essentiellement les constituants ci-après dans les proportions pondérales suivantes :
| | |
|---|---|
| SiO₂ | 55 - 71% |
| Al₂O₃ | > 2% |
| MgO | 4-11% et > 8% si Al₂O₃ < 5% |
| Na₂O | 9 -16,5% |
| K₂O | 4 -10% |
| B₂O₃ | 0 - 4% |
avec Na₂O/K₂O < 1,8.

2. Composition de verre selon la revendication 1 **caractérisée en ce que** la teneur en MgO est supérieure à 7%.

3. Composition de verre selon la revendication 1 ou 2, **caractérisée en ce que** CaO n'est présent que sous forme d'impuretés.

4. Composition de verre selon l'une des revendications 1 à 3, **caractérisée en ce que** la teneur pondérale en B₂O₃ est inférieure à 2% et **en ce que** la teneur pondérale en Al₂O₃ est inférieure à 10%.

5. Composition de verre selon l'une des revendications 1 à 4, **caractérisée en ce que** le rapport Na₂O/K₂O est inférieur à 1,4.

6. Composition de verre selon l'une des revendications 1 à 5, **caractérisée en ce que** la somme des pourcentages pondéraux des oxydes alcalins est inférieure à 23%.

7. Composition de verre selon l'une des revendication 1 à 6, **caractérisée en ce que** l'alcalinité est inférieure à 15 et de préférence inférieure à 10.

8. Composition de verre selon l'une des revendications précédentes, **caractérisée en ce qu'**elle est susceptible d'être transformée en ruban de verre selon le procédé float de coulée sur un bain d'étain en fusion.

9. Composition de verre selon l'une des revendications précédentes, **caractérisée en ce que** son coefficient de dilatation est supérieur à 90.10⁻⁷°C⁻¹.

10. Composition de verre selon l'une des revendications précédentes, **caractérisée en ce que** sa température de recuisson Ts est supérieure à 500°C et de préférence supérieure à 540°C.

11. Substrat en verre formé d'une matrice répondant à l'une des revendications 1 à 10, **caractérisé en ce qu'**il présente une profondeur de renforcement par échange d'ions superficiel supérieur à 200 micromètres et une contrainte de compression superficielle supérieure à 400 MPa.

12. Substrat en verre formé d'une matrice répondant à l'une des revendications 1 à 10, **caractérisé en ce qu'**il présente une profondeur de renforcement par échange d'ions superficiel supérieur à 50 micromètres et une contrainte de compression superficielle supérieure à 700 MPa.

13. Procédé d'obtention d'un substrat en verre conforme à l'une des revendications 11 et 12, **caractérisé en ce que** le verre est formé dans une installation du type float et traité par échange d'ions potassium pendant une durée d'au moins 24 heures à une température comprise entre 350°C et 500°C.

14. Utilisation d'un substrat en verre décrit selon l'une des revendications 11 ou 12 pour la réalisation de vitrages composites feuilletés tels que des vitrages aéronautiques.

## Claims

1. Glass composition intended to be converted into glass ribbon, **characterized in that** it comprises the constituents below in the following proportions by weight:
| | |
|---|---|
| SiO₂ | 55 - 71 % |
| Al₂O₃ | > 2% |
| MgO | 4 - 11%, and > 8% if Al₂O₃ < 5% |
| Na₂O | 9 - 16.5% |
| K₂O | 4 - 10% |
| B₂O₃ | 0 - 4% |
with Na₂O/K₂O < 1.8.

2. Glass composition according to Claim 1, **characterized in that** the content of MgO is greater than 7%.

3. Glass composition according to Claim 1 or 2, **characterized in that** CaO is present only in the form of impurities.

4. Glass composition according to one of Claims 1 to 3, **characterized in that** the Al₂O₃ weight content is greater than 10%.

5. Glass composition according to one Claims 1 to 4, **characterized in that** the Na₂O/K₂O ratio is lower than 1.4.

6. Glass composition according to one of Claims 1 to 5, **characterized in that** the sum of the weight percentages of the alkali metal oxides is less than 23%.

7. Glass composition according to one of Claims 1 to 6, **characterized in that** the alkalinity is less than 15 and preferably less than 10.

8. Glass composition according to one of the preceding claims, **characterized in that** it is capable of being converted into glass ribbon using the float process in which the glass is cast onto a bath of molten tin.

9. Glass composition according to one of the preceding claims, **characterized in that** its expansion coefficient is greater than 90x10⁻⁷°C⁻¹.

10. Glass composition according to one of the preceding claims, **characterized in that** its annealing temperature Tₛ is greater than 500°C and preferably greater than 540°C.

11. Glass substrate, the matrix of which satisfies one of the compositions according to one of Claims 1 to 10, **characterized in that** it is strengthened by surface ion exchange to a surface exchange depth of greater than 200 microns, **and in that** it has compressive surface stresses of greater than 400 MPa.

12. Glass substrate, the matrix of which satisfies one of the compositions according to one of Claims 1 to 10, **characterized in that** it is strengthened by surface ion exchange to a surface exchange depth of greater than 50 microns, **and in that** it has compressive surface stresses of greater than 700 MPa.

13. Process for obtaining a glass substrate according to Claim 11 or 12, **characterized in that** the glass is formed in a float-type plant and treated by potassium ion exchange for a time of at least 24 hours at a temperature of between 350°C and 500°C.

14. Use of a glass substrate described according to Claims 11 or 12 for the production of laminated composite windows, such as aeronautical windows.

## Patentansprüche

1. Glaszusammensetzung, die vorgesehen ist, zu einem Glasband verarbeitet zu werden, **dadurch gekennzeichnet, dass** sie im Wesentlichen folgende Bestandteile mit nachstehenden Gewichtsanteilen umfasst:
| | |
|---|---|
| SiO₂ | 55 bis 71 % |
| Al₂O₃ | > 2 % |
| MgO | 4 bis 11 % und > 8 %, wenn Al₂O₃ < 5 % |
| Na₂O | 9 bis 16,5 % |
| K₂O | 4 bis 10 % |
| B₂O₃ | 0 bis 4 %, |
mit Na₂O/K₂O < 1,8.

2. Glaszusammensetzung nach Anspruch 1, **dadurch gekennzeichnet, dass** der MgO-Gehalt mehr als 7 % beträgt.

3. Glaszusammensetzung nach Anspruch 1 oder 2, **dadurch gekennzeichnet, dass** CaO nur in Form von Verunreinigungen vorhanden ist.

4. Glaszusammensetzung nach einem der Ansprüche 1 bis 3, **dadurch gekennzeichnet, dass** der gewichtsmäßige B₂O₃-Gehalt weniger als 2 % beträgt, **und dass** der gewichtsmäßige Al₂O-Gehalt weniger als 10 % beträgt.

5. Glaszusammensetzung nach einem der Ansprüche 1 bis 4, **dadurch gekennzeichnet, dass** das Verhältnis von Na₂O/K₂O kleiner als 1,4 ist.

6. Glaszusammensetzung nach einem der Ansprüche 1 bis 5, **dadurch gekennzeichnet, dass** die Summe der prozentualen Gewichtsanteile der Alkalimetalloxide weniger als 23 % beträgt.

7. Glaszusammensetzung nach einem der Ansprüche 1 bis 6, **dadurch gekennzeichnet, dass** die Alkalität weniger als 15 und vorzugsweise weniger als 10 beträgt.

8. Glaszusammensetzung nach einem der vorhergehenden Ansprüche, **dadurch gekennzeichnet, dass** sie gemäß dem Floatverfahren auf einem Bad aus einer Zinnschmelze zu einem Glasband verarbeitet werden kann.

9. Glaszusammensetzung nach einem der vorhergehenden Ansprüche, **dadurch gekennzeichnet, dass** ihr Ausdehnungskoeffizient mehr als 90·10⁻⁷ °C⁻¹ beträgt.

10. Glaszusammensetzung nach einem der vorhergehenden Ansprüche, **dadurch gekennzeichnet, dass** ihre Kühltemperatur Tₛ mehr als 500 °C und vorzugsweise mehr als 540 °C beträgt.

11. Glassubstrat, das von einer Matrix gebildet wird, die einem der Ansprüche 1 bis 10 entspricht, **dadurch gekennzeichnet, dass** es eine durch Oberflächenionenaustausch bewirkte Verfestigungstiefe von größer als 200 Mikrometer und eine Oberflächendruckspannung von mehr als 400 MPa aufweist.

12. Glassubstrat, das von einer Matrix gebildet wird, die einem der Ansprüche 1 bis 10 entspricht, **dadurch gekennzeichnet, dass** es eine durch Oberflächenionenaustausch bewirkte Verfestigungstiefe von größer als 50 Mikrometer und eine Oberflächendruckspannung von mehr als 700 MPa aufweist.

13. Verfahren zur Herstellung eines Glassubstrats nach Anspruch 11 oder 12, **dadurch gekennzeichnet, dass** das Glas in einer Floatglasanlage gebildet und durch einen mindestens 24 Stunden langen Austausch von Kaliumionen bei einer Temperatur von 350 bis 500 °C behandelt wird.

14. Verwendung eines Glassubstrats nach Anspruch 11 oder 12 für die Herstellung von Verbundgläsern wie solchen für die Luftfahrt.
